# EUROPEAN PATENT APPLICATION

(11) **EP 4 817 975 A1**
(43) Date of publication of application: **07.10.2026**
(21) Application number: 24896283.9
(22) Date of filing: 14.11.2024
(51) Int. Cl.: B60T 17/18, B60T 13/74, B60R 16/023

(54) **PARKING METHOD, VEHICLE, AND STORAGE MEDIUM**

(30) Priority: 27.11.2023 CN 202311595757
(71) Applicant: Great Wall Motor Company Limited, Baoding, Hebei 071000 (CN)
(72) Inventor: ZHAO, Jingwei, Baoding, Hebei 071000 (CN); YANG, Rui, Baoding, Hebei 071000 (CN); WANG, Dongxu, Baoding, Hebei 071000 (CN); GAO, Mengqiao, Baoding, Hebei 071000 (CN); ZHANG, Shizhao, Baoding, Hebei 071000 (CN); LIU, Zhihan, Baoding, Hebei 071000 (CN)
(74) Representative: Klunker IP Patentanwälte PartG mbB
(86) International application number: PCT/CN2024/132070
(87) International publication number: WO 2025/113192

(57) **Abstract**

Provided are a method for parking a vehicle, a vehicle, and a storage medium. The method is applied to the field of vehicle braking. The method includes: receiving a parking signal transmitted by a communication device; detecting whether a parking mechanism corresponding to another parking chip other than a present parking chip to which the method is applied fails, in which the parking mechanism is included in a first parking device or a second parking device; and in response to detecting that the parking mechanism corresponding to the other parking chip fails, driving, based on a pre-stored backup parking strategy, the parking mechanism corresponding to the other parking chip to perform parking.

## Description

### CROSS-REFERENCE TO RELATED APPLICATION

This application is based on and claims priority to Chinese Patent Application No. 202311595757.5, filed on November 27, 2023, the entire contents of which are incorporated herein by reference.

### FIELD

The present disclosure relates to the technical field of vehicle braking, and in particular, to a method for parking a vehicle, a vehicle, and a storage medium.

### BACKGROUND

In the related art, the adoption of an electrical parking system, known as an Electronic Park Brake (EPB), overcomes the shortcomings of a traditional mechanical parking brake system. EPB offers higher precision and control performance, marking it the core parking system for enabling advanced driver assistance, autonomous driving, and deep regenerative braking in vehicles.

However, the parking brake system in the related art imposes high requirements on a main chip and its corresponding parking mechanism. The parking mechanism affects whether a vehicle can successfully perform a parking brake action. Once a fault occurs, it becomes difficult to ensure parking brake safety, presenting an urgent need for improvement.

### SUMMARY

The present disclosure provides a method for parking a vehicle, a vehicle, and a storage medium. In the method, when a parking mechanism corresponding to another parking chip other than a present parking to chip which the method is applied fails, this parking mechanism can be driven using a backup parking strategy pre-stored in the present parking chip to perform parking, which realizes redundant parking of the vehicle, and prevents vehicle body imbalance during parking caused by the failure of the parking mechanism corresponding to the other parking chip. In this way, when a parking mechanism fails, vehicle body stability and parking safety of the vehicle are improved.

In a first aspect, a method for parking a vehicle is provided. The vehicle includes: a first parking device and a second parking device that are respectively disposed corresponding to a front wheel and a rear wheel; a first control assembly configured to drive the first parking device to operate; a second control assembly configured to drive the second parking device to operate; and a communication device in communication with the first control assembly or the second control assembly. The first control assembly includes a first parking chip and a second parking chip, and the second control assembly includes a third parking chip and a fourth parking chip, the first parking chip. The second parking chip, the third parking chip, and the fourth parking chip communicating with each other; and the method is applied to any one of the first parking chip, the second parking chip, the third parking chip, and the fourth parking chip, and the method includes: receiving a parking signal transmitted by the communication device; detecting whether a parking mechanism corresponding to another parking chip among the first parking chip, the second parking chip, the third parking chip, and the fourth parking chip, other than a present parking chip to which the method is applied, fails, in which the parking mechanism is included in the first parking device or the second parking device; and in response to detecting that the parking mechanism corresponding to the other parking chip fails, driving, based on a pre-stored backup parking strategy, the parking mechanism corresponding to the other parking chip to perform parking.

Through the above technical method, when the parking mechanism corresponding to the other parking chip fails, this parking mechanism can be driven by using the backup parking strategy pre-stored in the present parking chip to perform parking, which realizes the redundant parking of the vehicle, and prevents the vehicle body imbalance during parking caused by the failure of the parking mechanism corresponding to the other parking chip. In this way, when a parking mechanism fails, the vehicle body stability and the parking safety of the vehicle are improved.

In conjunction with the first aspect, in some possible implementations, the detecting whether the parking mechanism corresponding to the other parking chip fails includes: determining whether driving power of a solenoid valve pushrod of the vehicle satisfies a predetermined current condition; determining whether the solenoid valve pushrod is located at a predetermined position; and obtaining a response state and/or feedback data of the parking mechanism, and determining whether the parking mechanism fails in combination with a pose relationship among parking mechanisms corresponding to the first parking chip, the second parking chip, the third parking chip, and the fourth parking chip.

Through the above technical method, it can be determined whether the parking mechanism corresponding to the parking chip fails, facilitating a determination of the parking strategy.

In conjunction with the first aspect, in some possible implementations, the method further includes, prior to the driving, based on the pre-stored backup parking strategy, the parking mechanism corresponding to the other parking chip to perform parking: obtaining failure information of the parking mechanism corresponding to the other parking chip; and determining the backup parking strategy matching the failure information.

Through the above technical method, the backup parking strategy matching the failure information can be determined, to realize more targeted redundant parking for different failure conditions and ensure parking stability of the vehicle.

In conjunction with the first aspect, in some possible implementations, the method further includes, prior to the driving, based on the pre-stored backup parking strategy, the parking mechanism corresponding to the other parking chip to perform parking: detecting an actual failure type of the parking mechanism corresponding to the other parking chip; and determining the backup parking strategy based on the actual failure type.

Through the above technical method, the corresponding backup parking strategy can be determined based on the actual failure type of the parking mechanism, to realize more targeted redundant parking for different failure types and ensure the parking stability of the vehicle.

In conjunction with the first aspect, in some possible implementations, the actual failure type includes at least one of failure of a control assembly of the parking mechanism, failure of a receiving module of the parking mechanism, failure of a clamping module of the parking mechanism, failure of a parking execution module of the parking mechanism, and signal feedback failure of the parking mechanism.

In conjunction with the first aspect, in some possible implementations, the method further includes, prior to the driving, based on the pre-stored backup parking strategy, the parking mechanism corresponding to the other parking chip to perform parking: obtaining historical parking data or previous parking data of the parking mechanism corresponding to the other parking chip; and generating a new parking strategy as the backup parking strategy based on the historical parking data or the previous parking data in combination with a current parking strategy of the present parking chip.

Through the above technical method, the backup parking strategy can be modified based on the historical parking data or the previous parking data, enabling the backup parking strategy to conform to a driver's historical parking habit.

In conjunction with the first aspect, in some possible implementations, the generating the new parking strategy as the backup parking strategy based on the historical parking data or the previous parking data in combination with the current parking strategy of the present parking chip includes: determining whether a historical parking operating condition corresponding to the historical parking data or the previous parking data is the same as a current parking operating condition of the vehicle; and in response to determining that the historical parking operating condition is different from the current parking operating condition, extracting parking preference of a driver from the historical parking data or the previous parking data, and generating the new parking strategy based on the parking preference and the current parking strategy.

Through the above technical method, the parking strategy can be generated based on the parking preference when the historical parking data does not match the current parking operating condition.

In conjunction with the first aspect, in some possible implementations, the driving, based on the pre-stored backup parking strategy, the parking mechanism corresponding to the other parking chip to perform parking includes: obtaining parking information of all failed parking mechanisms; simulating a parking effect based on the parking information, the backup parking strategy, and parking information of all non-failed parking mechanisms to obtain a simulation result; determining whether the simulation result satisfies a predetermined safe parking condition; and in response to detecting that the simulation result satisfies the predetermined safe parking condition, driving, based on the backup parking strategy, the parking mechanism corresponding to the other parking chip to perform parking.

Through the above technical method, parking simulation can be performed by using the backup parking strategy based on the parking information of all the parking mechanisms of the vehicle, to determine whether the backup parking strategy is safe and reliable based on the simulation result.

In conjunction with the first aspect, in some possible implementations, the method further includes, subsequent to the determining whether the simulation result satisfies the predetermined safe parking condition: in response to detecting that the simulation result does not satisfy the predetermined safe parking condition, pushing the simulation result to a predetermined terminal.

Through the above technical method, when the simulation result does not satisfy the predetermined safe parking condition, the simulation result can be transmitted to the predetermined terminal in time to seek external assistance.

In conjunction with the first aspect, in some possible implementations, the method further includes, prior to the driving, based on the pre-stored backup parking strategy, the parking mechanism corresponding to the other parking chip to perform parking: determining, based on overall vehicle information of the vehicle, whether the pre-stored backup parking strategy satisfies a predetermined invocation condition; and in response to determining that the backup parking strategy does not satisfy the predetermined invocation condition, generating a corresponding backup parking strategy based on the overall vehicle information and a current parking strategy of the other parking chip, to update the pre-stored backup parking strategy.

Through the above technical method, it can be determined whether the pre-stored backup parking strategy is invocable. Moreover, when the pre-stored backup parking strategy is not invocable, a new backup parking strategy can be generated based on the overall vehicle information and the current parking strategy of the other parking chip. In this way, it is ensured that a usable backup parking strategy is always available when a parking mechanism of the vehicle fails.

In conjunction with the first aspect, in some possible implementations, the method further includes: in response to detecting that a parking mechanism corresponding to the present parking chip fails, driving the parking mechanism corresponding to the present parking chip to perform parking, and transmitting parking information of the parking mechanism corresponding to the present parking chip and/or a parking strategy of the present parking chip and/or a control parameter of the present parking chip to the other parking chip.

Through the above technical method, when the parking mechanism corresponding to the present parking chip fails, the parking information of the parking mechanism corresponding to the present parking chip and/or the parking strategy of the present parking chip and/or the control parameter of the present parking chip can be transmitted to the other parking chip. In this way, the other parking chip can adjust the parking strategy accordingly to ensure the parking stability of the vehicle.

In a second aspect, an apparatus for parking a vehicle is provided. The vehicle includes: a first parking device and a second parking device that are respectively disposed corresponding to a front wheel and a rear wheel; a first control assembly configured to drive the first parking device to operate; a second control assembly configured to drive the second parking device to operate; and a communication device in communication with the first control assembly or the second control assembly. The first control assembly includes a first parking chip and a second parking chip. The second control assembly includes a third parking chip and a fourth parking chip. The apparatus is applied to any one of the first parking chip, the second parking chip, the third parking chip, and the fourth parking chip. The apparatus includes: a receiving module configured to receive a parking signal transmitted by the communication device; a detection module configured to detect whether a parking mechanism corresponding to another parking chip among the first parking chip, the second parking chip, the third parking chip, and the fourth parking chip, other than a present parking chip to which the apparatus is applied, fails, in which the parking mechanism is included in the first parking device or the second parking device; and a driving module configured to, in response to detecting that the parking mechanism corresponding to the other parking chip fails, drive, based on a pre-stored backup parking strategy, the parking mechanism corresponding to the other parking chip to perform parking.

In conjunction with the second aspect, in some possible implementations, the detection module includes: a first determination unit configured to determine whether driving power of a solenoid valve pushrod of the vehicle satisfies a predetermined current condition; a second determination unit configured to determine whether the solenoid valve pushrod is located at a predetermined position; and a third determination unit configured to obtain a response state and/or feedback data of the parking mechanism, and determine whether the parking mechanism fails in combination with a pose relationship among parking mechanisms corresponding to the first parking chip, the second parking chip, the third parking chip, and the fourth parking chip.

In conjunction with the second aspect, in some possible implementations, the apparatus further includes: a first obtaining module configured to obtain failure information of the parking mechanism corresponding to the other parking chip; and a matching module configured to determine a backup parking strategy matching the failure information.

In conjunction with the second aspect, in some possible implementations, the apparatus further includes: a detection module configured to detect an actual failure type of the parking mechanism corresponding to the other parking chip; and a determination module configured to determine the backup parking strategy based on the actual failure type.

In conjunction with the second aspect, in some possible implementations, the actual failure type includes at least one of failure of a control assembly of the parking mechanism, failure of a receiving module of the parking mechanism, failure of a clamping module of the parking mechanism, failure of a parking execution module of the parking mechanism, and signal feedback failure of the parking mechanism.

In conjunction with the second aspect, in some possible implementations, the apparatus further includes: a second obtaining module configured to obtain historical parking data or the previous parking data of the parking mechanism corresponding to the other parking chip; and a first generation module configured to generate a new parking strategy as the backup parking strategy based on the historical parking data or the previous parking data in combination with a current parking strategy of the present parking chip.

In conjunction with the second aspect, in some possible implementations, the first generation module includes: a fourth determination unit configured to determine whether a historical parking operating condition corresponding to the historical parking data or the previous parking data is the same as a current parking operating condition of the vehicle; and a generation unit configured to, in response to determining that the historical parking operating condition is different from the current parking operating condition, extract parking preference of a driver from the historical parking data or the previous parking data, and generate the new parking strategy based on the parking preference and the current parking strategy.

In conjunction with the second aspect, in some possible implementations, the driving module includes: an obtaining unit configured to obtain parking information of all failed parking mechanisms; a simulation unit configured to simulate a parking effect based on the parking information, the backup parking strategy, and parking information of all non-failed parking mechanisms to obtain a simulation result; a detection unit configured to determine whether the simulation result satisfies a predetermined safe parking condition; and a driving unit configured to, in response to detecting that the simulation result satisfies the predetermined safe parking condition, drive, based on the backup parking strategy, the parking mechanism corresponding to the other parking chip to perform parking.

In conjunction with the second aspect, in some possible implementations, the driving module is further configured to, in response to detecting that the simulation result does not satisfy the predetermined safe parking condition, push the simulation result to a predetermined terminal.

In conjunction with the second aspect, in some possible implementations, the apparatus further includes: a determination module configured to determine, based on overall vehicle information of the vehicle, whether the pre-stored backup parking strategy satisfies a predetermined invocation condition; and a second generation module configured to, in response to determining that the backup parking strategy does not satisfy the predetermined invocation condition, generate a corresponding backup parking strategy based on the overall vehicle information and a current parking strategy of the other parking chip, to update the pre-stored backup parking strategy.

In conjunction with the second aspect, in some possible implementations, the apparatus further includes: a control module configured to, in response to detecting that a parking mechanism corresponding to the present parking chip fails, drive the parking mechanism corresponding to the present parking chip to perform parking, and transmit parking information of the parking mechanism corresponding to the present parking chip and/or a parking strategy of the present parking chip and/or a control parameter of the present parking chip to the other parking chip.

In a third aspect, a vehicle is provided. The vehicle includes: a memory; a processor; and a computer program stored in the memory and executable on the processor. The processor executes the program to implement the method for parking the vehicle as described in the above embodiments.

In a fourth aspect, a computer program product is provided. The computer program product includes a computer program code. The computer program code, when running on a computer, causes the computer to execute the method for parking a vehicle in the first aspect or any one of the possible implementations of the first aspect.

Additional aspects and advantages of the present disclosure will be partially set forth in the following description, and partially will become apparent from the following description, or will be learned through practice of the present disclosure.

### BRIEF DESCRIPTION OF THE DRAWINGS

The above and/or additional aspects and advantages of the present disclosure will become apparent and readily understandable from the following description of embodiments taken in conjunction with the accompanying drawings, in which:
FIG. 1a is a schematic diagram of a system architecture of a method for parking a vehicle according to an embodiment of the present disclosure;
FIG. 1b is a schematic diagram of a system architecture of a method for parking a vehicle according to another embodiment of the present disclosure;
FIG. 2 is a schematic diagram of a system architecture of a method for parking a vehicle according to yet another embodiment of the present disclosure;
FIG. 3 is a schematic diagram of a system architecture of a method for parking a vehicle according to still yet another embodiment of the present disclosure;
FIG. 4 is a flowchart of a method for parking a vehicle according to an embodiment of the present disclosure;
FIG. 5a is a first schematic structural diagram of an apparatus for parking a vehicle according to an embodiment of the present disclosure;
FIG. 5b is a second schematic structural diagram of an apparatus for parking a vehicle according to an embodiment of the present disclosure;
FIG. 5c is a third schematic structural diagram of an apparatus for parking a vehicle according to an embodiment of the present disclosure;
FIG. 5d is a fourth schematic structural diagram of an apparatus for parking a vehicle according to an embodiment of the present disclosure;
FIG. 5e is a fifth schematic structural diagram of an apparatus for parking a vehicle according to an embodiment of the present disclosure;
FIG. 5f is a sixth schematic structural diagram of an apparatus for parking a vehicle according to an embodiment of the present disclosure;
FIG. 5g is a seventh schematic structural diagram of an apparatus for parking a vehicle according to an embodiment of the present disclosure;
FIG. 5h is an eighth schematic structural diagram of an apparatus for parking a vehicle according to an embodiment of the present disclosure;
FIG. 5i is a ninth schematic structural diagram of an apparatus for parking a vehicle according to an embodiment of the present disclosure; and
FIG. 6 is a schematic structural diagram of a vehicle according to an embodiment of the present disclosure.

### DETAILED DESCRIPTION

The technical solutions in the present disclosure will be described clearly and in detail below with reference to the accompanying drawings. In the description of the embodiments of the present disclosure, unless otherwise specified, "/" means "or". For example, A/B may represent A or B. The term "and/or" in the text only represents a relationship between correlated objects, including three relationships. For example, "A and/or B" may mean three situations: A only, B only, or both A and B. In addition, in the description of the embodiments of the present disclosure, "a plurality of" refers to two or more than two.

Hereinafter, terms such as "first" and "second" are used for purposes of description and are not intended to indicate or imply relative importance, or to implicitly show the number of indicated technical features. Thus, the feature associated with "first" and "second" may include one or more this feature distinctly or implicitly.

A traditional parking brake system takes the form of a mechanical parking brake handle, which can be connected to a parking brake through a lever and a cable to lock a transmission shaft or a rear wheel for braking. When a driver needs to park a vehicle, the driver may manually pull up the parking brake handle to bring a brake plate into contact with a wheel and prevent the vehicle from moving forward. This operation is cumbersome and laborious, and is significantly affected by terrain, resulting in poor braking effect on uneven terrain, posing a large accident risk. In addition, as the operation of mechanical parking brake requires driver intervention, this brake is incompatible with autonomous driving technology, imposing certain limitations on the future development of automobiles.

Based on improvement to the traditional parking brake system, in the related art, electronic parking braking can be implemented through an Electrical Park Brake (EPB) with higher precision and control performance, thereby reducing the driver intervention, weakening an impact of a terrain factor on the braking effect, improving parking brake safety, and providing an auxiliary foundation for autonomous driving technology in terms of braking and parking. However, EPB relies on a parking mechanism to decelerate the vehicle and control parking. When the parking mechanism fails, the vehicle often loses control during parking, causing a major safety accident. In this way, it is difficult to ensure the parking brake safety, and it is unfavorable for improving user's driving experience.

Before explaining a method for parking a vehicle according to the embodiments of the present disclosure, a system architecture involved in the embodiments of the present disclosure will first be described.

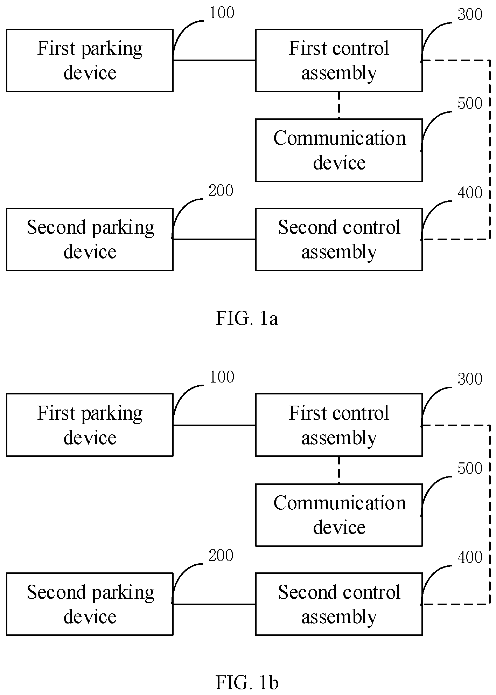

Next, an applicable scenario or the system architecture of the embodiments of the present disclosure will be exemplarily described. Reference is made to FIG. 1a, FIG. 1b, FIG. 2, and FIG. 3.

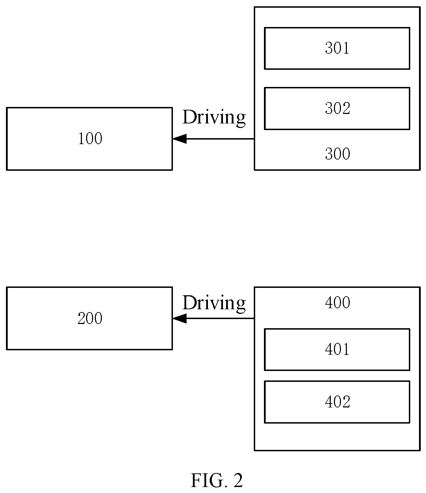

As shown in FIG. 1a, FIG. 1b, and FIG. 2, the system architecture of the embodiments of the present disclosure may include: a first parking device 100, a second parking device 200, a first control assembly 300, a second control assembly 400, and a communication device 500.

The first parking device 100 and the second parking device 200 are disposed corresponding to a front wheel and a rear wheel, respectively.

The first control assembly 300 includes a first parking chip 301 and a second parking chip 302.

The second control assembly 400 includes a third parking chip 401 and a fourth parking chip 402.

The first control assembly 300 drives the first parking device 100 to perform a parking action.

The second control assembly 400 may drive the second parking device 200 to perform a parking action.

The communication device 500 may communicate with the first control assembly 300 or the second control assembly 400. After the communication device 500 transmits a parking signal to one control assembly among the first control assembly 300 and the second control assembly 400, the one control assembly forwards the parking signal to the other control assembly among the first control assembly 300 and the second control assembly 400, to realize transmission of the parking signal. The first control assembly 300 and the second control assembly 400 may communicate with each other. The first parking chip 301, the second parking chip 302, the third parking chip 401, and the fourth parking chip 402 may communicate with each other.

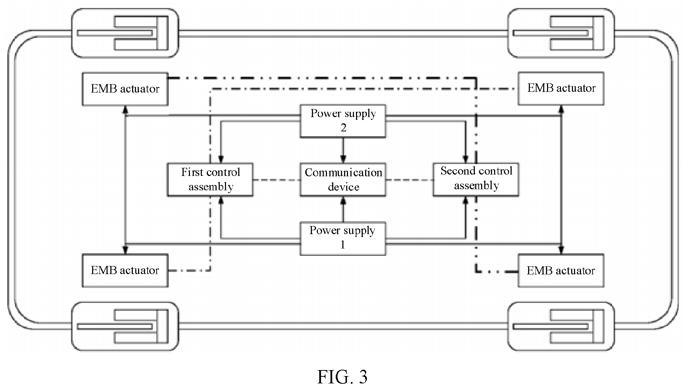

In an embodiment of the present disclosure, as shown in FIG. 3, the first control assembly 300 and the second control assembly 400 may be a front controller and a rear controller, respectively, to control their respective parking mechanisms, such as Electromechanical Brake System (EMB) actuators, based on the arrangement relationship of the first parking device 100 and the second parking device 200 with the front and rear wheels respectively.

The communication device 500 receives a signal from the first control assembly 300 and a signal from the second control assembly 400 for redundancy, ensuring that even if the first control assembly 300 and the second control assembly 400 fail, the communication device 500 can still transmit an instruction to a four-wheel parking mechanism actuator through the parking chip.

Power supplies supply power to the four parking mechanisms, the first control assembly 300, and the second control assembly 400, respectively. One of the power supplies is a redundant power supply to prevent an electrical parking system from failing to operate due to the failure of a single power supply.

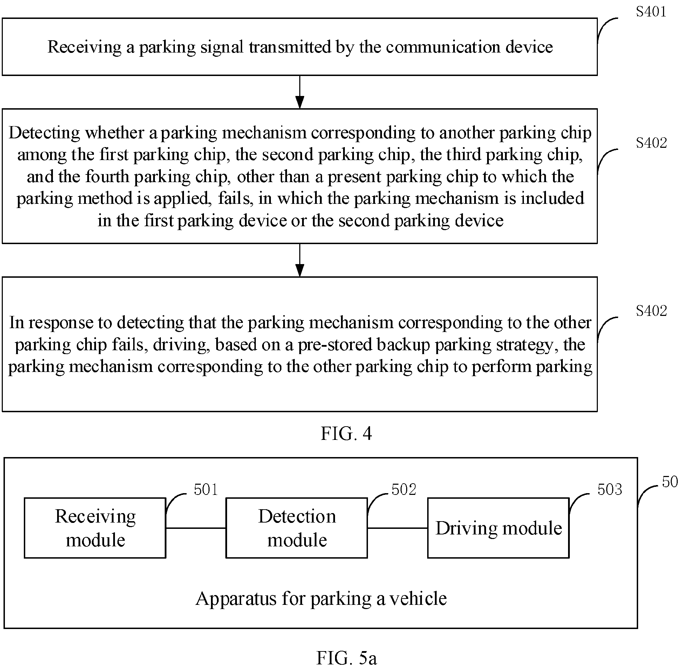

FIG. 4 is a schematic flowchart of a method for parking a vehicle according to an embodiment of the present disclosure.

Exemplarily, as shown in FIG. 4, the method includes following steps S401 to S403.

At step S401, a parking signal transmitted by the communication device is received.

In actual implementation, in the embodiment of the present disclosure, the parking signal transmitted by the communication device can be received by any one of the first parking chip 301, the second parking chip 302, the third parking chip 401, and the fourth parking chip 402, to generate a corresponding parking strategy based on the parking signal, thus controlling the corresponding parking mechanism to perform parking through the parking strategy. Meanwhile, the parking signal can also be forwarded to another parking chip, among the first parking chip 301, the second parking chip 302, the third parking chip 401, and the fourth parking chip 402, other than a present parking chip to which the method is applied to improve efficiency and quality of signal transmission.

At step S402, it is detected whether a parking mechanism corresponding to the other parking chip fails. The parking mechanism is included in the first parking device 100 or the second parking device 200.

It should be understood that the parking mechanism corresponding to the parking chip may suffer a failure. The reason for the failure may include failure to transmit the parking strategy in the parking chip to the parking mechanism, failure to receive a feedback signal from the parking mechanism by the parking chip, and the like. A corresponding failure consequence may include the parking chip being unable to adjust the parking strategy in a timely manner based on an actual parameter of the parking mechanism.

When only parking mechanisms corresponding to some parking chips fail, a non-failed parking mechanism executes the parking strategy based on the corresponding parking chips, while the failed parking mechanisms cannot execute the same parking strategy. In this way, it is very likely to cause the vehicle to lose balance during parking and thus lead to a traffic accident.

Optionally, in an embodiment of the present disclosure, the detecting whether the parking mechanism corresponding to the other parking chip fails includes: determining whether driving power of a solenoid valve pushrod of the vehicle satisfies a predetermined current condition; determining whether the solenoid valve pushrod is located at a predetermined position; and obtaining a response state and/or feedback data of the parking mechanism, and determining whether the parking mechanism fails in combination with a pose relationship among the parking mechanisms.

The method for detecting whether the parking mechanism fails may include: detecting whether a driving current of the solenoid valve pushrod is properly applied, while determining whether poor contact, a short circuit, or other faults exist based on magnitude of the current; detecting whether the solenoid valve pushrod reaches an expected physical position through a displacement sensor; canceling a driving state of the solenoid valve pushrod (which remains in place due to its characteristic), slowly reducing a driving current of a brake motor, and observing whether a rotation angle of a driving motor changes; and transmitting a signal to the parking mechanism by the parking chip corresponding to the parking mechanism, and detecting the response state of the parking mechanism, or determining whether the parking chip can receive the feedback data of the parking mechanism, and when the feedback data of the parking mechanism can be received, comparing the received feedback data of the parking mechanism with data received by the other parking chip to determine whether a data difference conforms to the pose relationship among different parking mechanisms.

Through the above method, it is possible to detect whether the parking mechanism is faulty or fails.

Therefore, in the embodiment of the present disclosure, provided that the parking mechanism corresponding to the present parking chip does not fail, it can be detected whether the parking mechanism corresponding to the other parking chip fails. The parking mechanism is included in the first parking device or the second parking device.

It should be noted that the case where the parking mechanism corresponding to the present parking chip fails will be described below.

At step S403, in response to detecting that the parking mechanism corresponding to the other parking chip fails, the parking mechanism corresponding to the other parking chip is driven based on a pre-stored backup parking strategy to perform parking.

In the embodiment of the present disclosure, when it is detected that the parking mechanism corresponding to the other parking chip fails, i.e., when the parking strategy in the other parking chip cannot be transmitted to the parking mechanism corresponding to the other parking chip, the parking mechanism corresponding to the other parking chip can be driven based on the pre-stored backup parking strategy to perform parking. In this way, it can be realized that each parking mechanism can participate in vehicle braking, while maintaining vehicle body stability of the vehicle during parking.

The backup parking strategy will be described below.

Optionally, in an embodiment of the present disclosure, the method further includes, prior to the driving, based on the pre-stored backup parking strategy, the parking mechanism corresponding to the other parking chip to perform parking: obtaining failure information of the parking mechanism corresponding to the other parking chip; and determining a backup parking strategy matching the failure information.

In some embodiments, the backup parking strategy can be obtained by matching according to the failure information of the parking mechanism corresponding to the other parking chip.

The failure information may include a failure type, a failure signal, a failure value, and the like. In the embodiment of the present disclosure, backup parking strategies matching different failure information can be determined, which enables the backup parking strategy to realize more targeted redundant parking for different failure conditions, ensuring parking stability of the vehicle.

For example, based on different failure types, such as failure of a parking device control assembly or failure of a parking mechanism receiving module, the corresponding backup parking strategy matched in the embodiment of the present disclosure may include activating other non-faulty assemblies or modules, attempting a restart, or the like.

Optionally, in an embodiment of the present disclosure, the method further includes, prior to the driving, based on the pre-stored backup parking strategy, the parking mechanism corresponding to the other parking chip to perform parking: detecting an actual failure type of the parking mechanism corresponding to the other parking chip; and determining the backup parking strategy based on the actual failure type.

In other embodiments, the backup parking strategy can be further determined based on the actual failure type of the parking mechanism corresponding to the other parking chip.

Optionally, in an embodiment of the present disclosure, the actual failure type includes at least one of failure of a control assembly of the parking mechanism, failure of a receiving module of the parking mechanism, failure of a clamping module of the parking mechanism, failure of a parking execution module of the parking mechanism, or signal feedback failure of the parking mechanism.

The actual failure type of the parking mechanism may include occasional failure of the control assembly of the parking mechanism, failure of the receiving module of the parking mechanism (such as driving failure or signal failure, which may be caused by wiring harness failure, plug-in failure, or the like), occasional failure of the clamping module (such as an occasional fault, clamping stagnation, or failure to fully engage), occasional failure of the parking execution module (such as an occasional fault, clamping stagnation, or failure to fully engage), signal feedback failure, or the like.

When the failure information is the failure of the control assembly of the parking mechanism, the matched backup parking strategy may include resetting the failed control assembly, which is similar to a restart, maintaining a driver's use requirement, and attempting to control after recovery. When the reset fails after three repeated attempts, it is determined that the control assembly cannot recover in a short time and that the parking mechanism may be faulty. In this case, the parking operation is performed by another parking mechanism. The control assembly may include an electronic control unit, a chip, a communication structure, or the like, which can be specifically set by those skilled in the art based on an actual connection mode of the parking mechanism.

When the failure information is the failure of the receiving module of the parking mechanism, the matched backup parking strategy may include: in response to the failure of the receiving module of the parking mechanism that disables normal operation of the parking mechanism, determining that the control assembly cannot be restored in a short time, which possibly indicates a parking mechanism fault, and performing the parking operation by the other parking mechanism.

When the failure information is the failure of the clamping module, the matched backup parking strategy may include resetting the failed assembly of the clamping module, which is similar to a restart, maintaining the driver's use requirement, and attempting to control after recovery. When it occurs three times within a cumulative period of time, it is determined that the clamping assembly in clamping module of this wheel has low availability and may indicates a parking mechanism fault, and the parking operation is performed by the other parking mechanism instead.

When the failure information is the signal feedback failure, the matched backup parking strategy may include taking an execution result as the criterion when there is a relevant detection method available to determine an executive condition. If functional, a parking brake function of the wheel is maintained. If non-functional, degradation is performed, and the parking operation is performed by the other parking mechanism to ensure a clamping force. When no relevant detection method can determine the execution condition, the availability of the present parking mechanism is deemed insufficient, and the parking operation is performed by the other parking mechanism to ensure the clamping force.

Through the above technical method, the corresponding backup parking strategy can be determined based on the actual failure type of the parking mechanism, to realize more targeted redundant parking for different failure types and ensure the parking stability of the vehicle.

Optionally, in an embodiment of the present disclosure, the method further includes, prior to the driving, based on the pre-stored backup parking strategy, the parking mechanism corresponding to the other parking chip to perform parking: obtaining historical parking data or previous parking data of the parking mechanism corresponding to the other parking chip; and generating a new parking strategy as the backup parking strategy based on the historical parking data or the previous parking data in combination with a current parking strategy of the present parking chip.

In the embodiment of the present disclosure, the new parking strategy can be further generated based on the historical parking data or the previous parking data in combination with the current parking strategy of the present parking chip, enabling the backup parking strategy to conform to the driver's historical parking habit.

The historical parking data or the previous parking data enables assistance in vehicle parking with a previously adopted parking strategy under the same or similar conditions in the embodiment of the present disclosure, thereby improving a matching degree between the parking strategy and the current parking operating condition. In combination with the current parking strategy of the present parking chip, it is possible to make the parking strategy more suitable in case of a possible operating condition change.

Optionally, in an embodiment of the present disclosure, the generating the new parking strategy as the backup parking strategy based on the historical parking data or the previous parking data in combination with the current parking strategy of the present parking chip includes: determining whether a historical parking operating condition corresponding to the historical parking data or the previous parking data is the same as a current parking operating condition of the vehicle; and in response to determining that the historical parking operating condition is different from the current parking operating condition, extracting parking preference of a driver from the historical parking data or the previous parking data, and generating the new parking strategy based on the parking preference and the current parking strategy.

When a parking operating condition of the vehicle in the historical parking data or the previous parking data is different from the current parking operating condition, in the embodiment of the present disclosure, the driver's parking preference, such as efficient parking preference or smooth parking preference, can be extracted from the historical parking data or the previous parking data, to generate the new parking strategy based on the parking preference and the current parking strategy of the present parking chip. For example, the driver's parking preference is determined based on a deceleration-brake pedal travel relationship in vehicle historical data, to determine whether the deceleration-brake pedal travel relationship in the current parking strategy matches that in the historical data. When the deceleration-brake pedal travel relationship in the current parking strategy does not match that in the historical data, the deceleration-brake pedal travel relationship in the current parking strategy is revised to that in the historical data, or a middle value between the current parking strategy and the historical data is taken to obtain a new parking strategy.

Optionally, in an embodiment of the present disclosure, the driving, based on the pre-stored backup parking strategy, the parking mechanism corresponding to the other parking chip to perform parking includes: obtaining parking information of all failed parking mechanisms; simulating a parking effect based on the parking information, the backup parking strategy, and parking information of all non-failed parking mechanisms to obtain a simulation result; determining whether the simulation result satisfies a predetermined safe parking condition; and in response to detecting that the simulation result satisfies the predetermined safe parking condition, driving, based on the backup parking strategy, the parking mechanism corresponding to the other parking chip to perform parking.

In actual implementation, in the embodiment of the present disclosure, the simulation can be performed based on the parking information of all the failed parking mechanisms, the backup parking strategy, and the parking information of the non-failed parking mechanism. Moreover, it can be determined whether the simulation result satisfies the predetermined safe parking condition. The predetermined safe parking condition may include determining whether the parking position is a target parking position when the vehicle completes parking, determining whether the wheel returns to the straight-ahead position after the vehicle is parked, determining whether the vehicle may roll after the vehicle is parked, determining whether the vehicle can complete parking within an expected parking time length, or the like. The parking information of the failed parking mechanism may include fault alarm signal data of the parking mechanism, failure information of the parking mechanism, a failure type, state information, the number of failed parking mechanism, or the like, to determine a specific failed component of the parking mechanism and the pose relationship between the failed parking mechanisms, as well as a pose relationship between the failed parking mechanism and the non-failed parking mechanism. The parking information of the non-failed parking mechanism may include the absence of a parking mechanism fault alarm signal, position information of the parking mechanism, or the like.

When the simulation result satisfies the predetermined safety parking condition, in the embodiment of the present disclosure, the parking can be performed using the current backup parking strategy, to determine whether the backup parking strategy is safe and reliable based on the simulation result.

Optionally, in an embodiment of the present disclosure, the method further includes, subsequent to the determining whether the simulation result satisfies the predetermined safe parking condition: in response to detecting that the simulation result does not satisfy the predetermined safe parking condition, pushing the simulation result to a predetermined terminal.

When the simulation result does not satisfy the predetermined safety condition, in the embodiment of the present disclosure, it is possible to determine that the current backup parking strategy is not applicable to the current parking operating condition, and redetermine a new matched backup parking strategy, or transmit a parking early warning to the driver to notify the driver to take over parking control. For example, the driver issues an emergency parking instruction, thereby triggering a backup emergency parking mechanism, such as an additionally provided emergency clamping device, or a backup brake pad to achieve parking.

In the embodiment of the present disclosure, the simulation result may also be pushed to the predetermined terminal, such as a vehicle enterprise terminal or a maintenance terminal, to determine a fault cause based on the simulation result, provide a driving operation suggestion for the driver, and also to facilitate a maintenance terminal to prepare a maintenance strategy in advance.

Optionally, in an embodiment of the present disclosure, the method further includes, prior to the driving, based on the pre-stored backup parking strategy, the parking mechanism corresponding to the other parking chip to perform parking: determining, based on overall vehicle information of the vehicle, whether the pre-stored backup parking strategy satisfies a predetermined invocation condition; and in response to determining that the backup parking strategy does not satisfy the predetermined invocation condition, generating a corresponding backup parking strategy based on the overall vehicle information and a current parking strategy of the other parking chip, to update the pre-stored backup parking strategy.

In the embodiment of the present disclosure, as a possible implementation, it can be determined whether the pre-stored parking strategy satisfies the predetermined invocation condition based on the overall vehicle information of the vehicle. The overall vehicle information may include a current gradient of the vehicle, overall vehicle load estimation (such as evaluation of a real-time vehicle load through acceleration and deceleration, such as 2 passengers and an actual vehicle current weight of 2500 kg), vehicle brake pedal sensitivity (such as a deceleration-brake pedal relationship), or the like. The predetermined invocation condition may include determining whether the vehicle can achieve stable parking after the implementation of the backup parking strategy is simulated.

In the embodiment of the present disclosure, when the backup parking strategy does not satisfy the predetermined invocation condition, the corresponding backup parking strategy can be generated based on the overall vehicle information and the current parking strategy of the other parking chip. For example, when the gradient is α and an actual vehicle load is mg, mgtanα is a component force to overcome gravity. The parking strategy only needs to make full use of an effective parking mechanism to satisfy this component force requirement to prevent rolling. That is, the corresponding backup parking strategy generated in the embodiment of the present disclosure may be that the parking force is greater than or equal to mgtanα.

In the embodiment of the present disclosure, when the backup parking strategy satisfies the predetermined invocation condition, the pre-stored backup parking strategy can be used to perform parking.

Through the above technical method, it can be determined whether the pre-stored backup parking strategy is invocable, and when it is not invocable, a new backup parking strategy can be generated based on the overall vehicle information and the current parking strategy of the other parking chip. In this way, it is ensured that a usable backup parking strategy is always available when the parking mechanism of the vehicle fails.

Optionally, in an embodiment of the present disclosure, the method further includes: in response to detecting that a parking mechanism corresponding to the present parking chip fails, while driving the parking mechanism corresponding to the present parking chip to perform parking, transmitting parking information of the parking mechanism corresponding to the present parking chip and/or a parking strategy of the present parking chip and/or a control parameter of the present parking chip to the other parking chip.

In actual implementation, a case where the parking mechanism corresponding to the present parking chip fails may also occur. In this case, in the embodiment of the present disclosure, the parking mechanism corresponding to the present parking chip can be driven using the backup parking strategy to perform parking. Meanwhile, the parking information of the parking mechanism corresponding to the present parking chip and/or the parking strategy of the present parking chip and/or the control parameter of the present parking chip can be transmitted to the other parking chip corresponding to the non-failed parking mechanism. In this way, the other parking chip can adjust its parking strategy accordingly to ensure the parking stability of the vehicle.

For example, a braking force is estimated based on an execution angle of the parking mechanism, the control parameter takes the execution angle as a reference, and the corresponding other parking mechanism may refer to this parameter. When it is determined that the parking braking force is relatively small based on the control parameter transmitted by the present parking chip, the other parking chip may correspondingly increase the braking force in the control parameter of the corresponding parking mechanism, to achieve the vehicle body stability.

In summary, in the present disclosure, through the above technical method, when the parking mechanism corresponding to the other parking chip fails, this parking mechanism can be driven using the backup parking strategy pre-stored in the present parking chip to perform parking, which realizes redundant parking of the vehicle, and prevents vehicle body imbalance during parking caused by failure of the parking mechanisms corresponding to the other parking chip. In this way, when a parking mechanism fails, the vehicle body stability and parking safety of the vehicle are improved.

FIGS. 5a to 5i are schematic structural diagrams of an apparatus for parking a vehicle according to an embodiment of the present disclosure.

Exemplarily, as shown in FIG. 5a, the apparatus 50 includes: a receiving module 501, a detection module 502, and a driving module 503.

In an embodiment of the present disclosure, the receiving module 501 is configured to receive a parking signal transmitted by the communication device.

The detection module 502 is configured to detect whether a parking mechanism corresponding to another parking chip other than a present parking chip. The parking mechanism is included in the first parking device 100 or the second parking device 200.

The driving module 503 is configured to, in response to detecting that the parking mechanism corresponding to the other parking chip fails, drive, based on a pre-stored backup parking strategy, the parking mechanism corresponding to the other parking chip to perform parking.

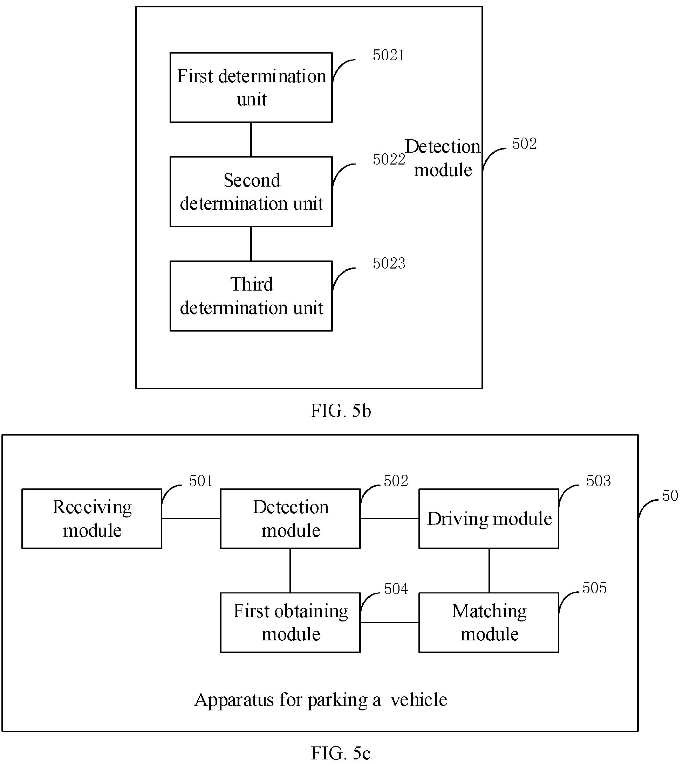

Optionally, as shown in FIG. 5b, in an embodiment of the present disclosure, the detection module 502 includes: a first determination unit 5021, a second determination unit 5022, and a third determination unit 5023.

The first determination unit 5021 is configured to determine whether driving power of a solenoid valve pushrod of the vehicle satisfies a predetermined current condition.

The second determination unit 5022 is configured to determine whether the solenoid valve pushrod is located at a predetermined position.

The third determination unit 5023 is configured to obtain a response state and/or feedback data of the parking mechanism, and determine whether the parking mechanism fails in combination with a pose relationship among parking mechanisms.

Optionally, as shown in FIG. 5c, in an embodiment of the present disclosure, the apparatus 50 further includes: a first obtaining module 504 and a matching module 505.

The first obtaining module 504 is configured to obtain failure information of the parking mechanism corresponding to the other parking chip.

The matching module 505 is configured to determine the backup parking strategy matching the failure information.

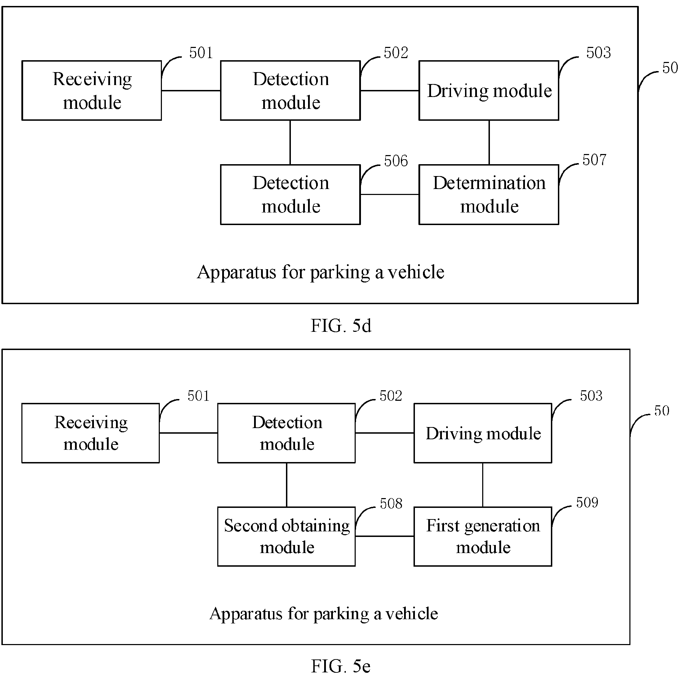

Optionally, as shown in FIG. 5d, in an embodiment of the present disclosure, the apparatus 50 further includes: a detection module 506 and a determination module 507.

The detection module 506 is configured to detect an actual failure type of the parking mechanism corresponding to the other parking chip.

The determination module 507 is configured to determine the backup parking strategy based on the actual failure type.

Optionally, in an embodiment of the present disclosure, the actual failure type includes at least one of failure of a control assembly of the parking mechanism, failure of a receiving module of the parking mechanism, failure of a clamping module of the parking mechanism, failure of a parking execution module of the parking mechanism, and signal feedback failure of the parking mechanism.

Optionally, as shown in FIG. 5e, in an embodiment of the present disclosure, the apparatus 50 further includes: a second obtaining module 508 and a first generation module 509.

The second obtaining module 508 is configured to obtain historical parking data or the previous parking data of the parking mechanism corresponding to the other parking chip.

The first generation module 509 is configured to generate a new parking strategy as the backup parking strategy based on the historical parking data or the previous parking data in combination with a current parking strategy of the present parking chip.

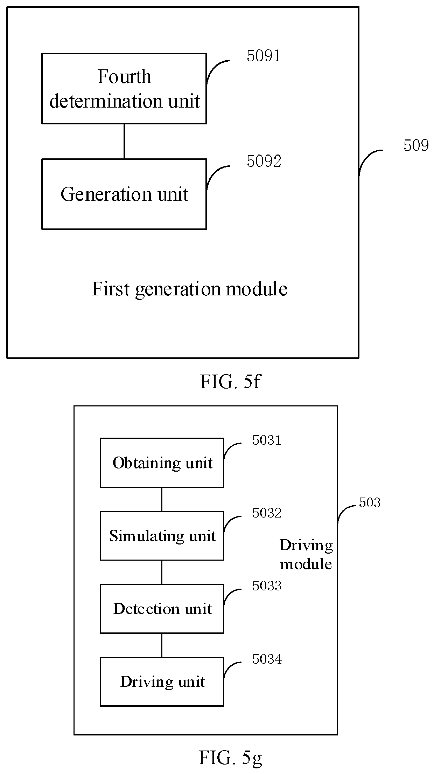

Optionally, as shown in FIG. 5f, in an embodiment of the present disclosure, the first generation module 509 includes: a fourth determination unit 5091 and a generation unit 5092.

The fourth determination unit 5091 is configured to determine whether a historical parking operating condition corresponding to the historical parking data or the previous parking data is the same as a current parking operating condition of the vehicle.

The generation unit 5092 is configured to, in response to determining that the historical parking operating condition is different from the current parking operating condition, extract parking preference of a driver from the historical parking data or the previous parking data, and generate the new parking strategy based on the parking preference and the current parking strategy.

Optionally, as shown in FIG. 5g, in an embodiment of the present disclosure, the driving module 503 includes: an obtaining unit 5031, a simulation unit 5032, a detection unit 5033, and a driving unit 5034.

The obtaining unit 5031 is configured to obtain parking information of all failed parking mechanisms.

The simulation unit 5032 is configured to simulate a parking effect based on the parking information, the backup parking strategy, and parking information of all non-failed parking mechanisms to obtain a simulation result.

The detection unit 5033 is configured to determine whether the simulation result satisfies a predetermined safe parking condition.

The driving unit 5034 is configured to, in response to detecting that the simulation result satisfies the predetermined safe parking condition, drive, based on the pre-stored backup parking strategy, the parking mechanism corresponding to the other parking chip to perform parking.

Optionally, in an embodiment of the present disclosure, the driving module 503 is further configured to, in response to detecting that the simulation result does not satisfy the predetermined safe parking condition, push the simulation result to a predetermined terminal.

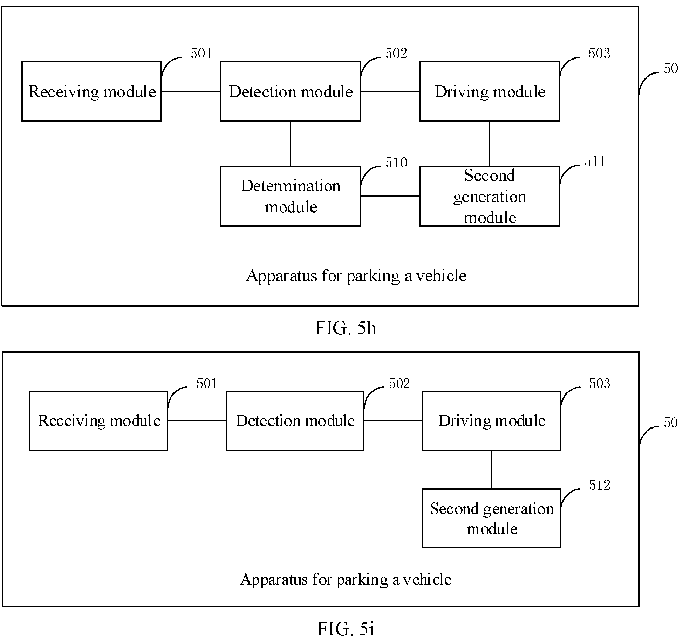

Optionally, as shown in FIG. 5h, in an embodiment of the present disclosure, the apparatus 50 further includes: a determination module 510 and a second generation module 511.

The determination module 510 is configured to determine, based on overall vehicle information of the vehicle, whether the pre-stored backup parking strategy satisfies a predetermined invocation condition.

The second generation module 511 is configured to, in response to determining that the pre-stored backup parking strategy does not satisfy the predetermined invocation condition, generate a corresponding backup parking strategy based on the overall vehicle information and a current parking strategy of the other parking chip, to update the pre-stored backup parking strategy.

Optionally, as shown in FIG. 5i, in an embodiment of the present disclosure, the apparatus 50 further includes a control module 512.

The control module 512 is configured to, in response to detecting that a parking mechanism corresponding to the present parking chip fails, drive the parking mechanism corresponding to the present parking chip to perform parking, and transmit parking information of the parking mechanism corresponding to the present parking chip and/or a parking strategy of the present parking chip and/or a control parameter of the present parking chip to the other parking chip.

In summary, in the present disclosure, through the above technical method, when the parking mechanism corresponding to the other parking chip fails, this parking mechanism can be driven using the backup parking strategy pre-stored in the present parking chip to perform parking, which realizes redundant parking of the vehicle, and prevents the vehicle body imbalance during parking caused by the failure of the parking mechanism corresponding to the other parking chip. In this way, when a parking mechanism fails, the vehicle body stability and the parking safety of the vehicle are improved.

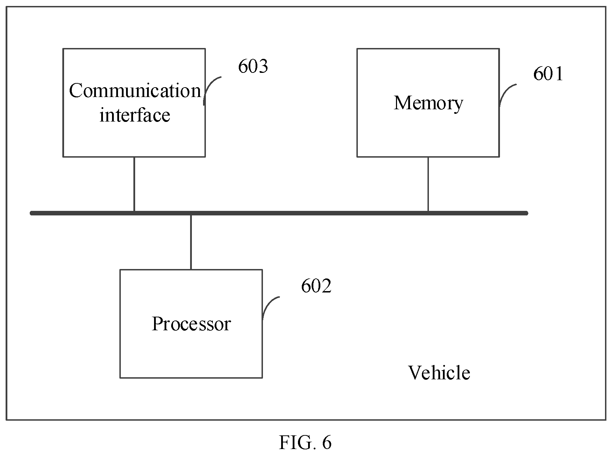

FIG. 6 is a schematic structural diagram of a vehicle according to an embodiment of the present disclosure. The vehicle may include: a memory 601; a processor 602; and a computer program stored in the memory 601 and executable on the processor 602.

The processor 602 implements the method for parking a vehicle provided in the above embodiments when executing the program.

The vehicle further includes: a communication interface 603 configured to communicate between the memory 601 and the processor 602.

The memory 601 is configured to store a computer program executable on the processor 602.

The memory 601 may include a high-speed Random Access Memory (RAM), and may also include a non-volatile memory, such as at least one disk memory.

When the memory 601, the processor 602, and the communication interface 603 are implemented independently, the communication interface 603, the memory 601, and the processor 602 may be interconnected and communicate with each other via a bus. The bus may be an Industry Standard Architecture (ISA) bus, a Peripheral Component (PCI) bus, or an Extended Industry Standard Architecture (EISA) bus. The buses may be divided into an address bus, a data bus, a control bus, etc. For the convenience of description, only one thick line is used in FIG. 6, but it does not mean that there is only one bus or one type of bus.

Optionally, in a specific implementation, when the memory 601, the processor 602, and the communication interface 603 are integrated on a single chip for an implementation, the memory 601, the processor 602, and the communication interface 603 may communicate with each other through an internal interface.

The processor 602 may be a Central Processing Unit (CPU), or an Application Specific Integrated Circuit (ASIC), or one or more integrated circuits configured to implement an embodiment of the present disclosure.

A computer-readable storage medium is further provided according to an embodiment. The computer-readable storage medium has a computer program stored thereon. The computer program, when executed by a processor, implements the method for parking a vehicle as described above.

In the description of this specification, descriptions with reference to the terms "an embodiment", "some embodiments", "an example", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "N" means at least two, such as two, three, etc., unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

The logic and/or step described in other manners herein or shown in the flowchart, for example, a particular sequence table of executable instructions for realizing the logical function, may be specifically realized in any computer readable medium to be used by the instruction execution system, device or equipment (such as the system based on computers, the system including processors or other systems capable of obtaining the instructions from the instruction execution system, device and equipment and executing the instructions), or to be used in combination with the instruction execution system, device and equipment. As to the specification, "the computer readable medium" may be any device adaptive for including, storing, communicating, propagating, or transferring programs to be used by or in combination with the instruction execution system, device or equipment. More specific examples of the computer readable medium include but are not limited to: an electronic connection (an electronic device) with one or N wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware or their combination. In the above embodiments, N steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above method of the embodiments of the present disclosure may be achieved by instructing the related hardware with programs. The programs may be stored in a computer-readable storage medium, and the programs include one or a combination of the steps in the method embodiments of the present disclosure when run on a computer.

In addition, each function cell of the embodiments of the present disclosure may be integrated in a processing module, or these cells may exist separately physically, or two or more cells may be integrated in a processing module. The integrated module may be realized in a form of hardware or in a form of software function modules. When the integrated module is realized in the form of a software function module and is sold or used as a standalone product, the integrated module may be stored in a computer-readable storage medium.

The storage medium mentioned above may be read-only memories, magnetic disks, CD, etc. Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from the scope of the present disclosure.

## Claims

1. A method for parking a vehicle, wherein the vehicle comprises: a first parking device and a second parking device that are respectively disposed corresponding to a front wheel and a rear wheel; a first control assembly configured to drive the first parking device to operate; a second control assembly configured to drive the second parking device to operate; and a communication device in communication with the first control assembly or the second control assembly, wherein the first control assembly comprises a first parking chip and a second parking chip, and the second control assembly comprises a third parking chip and a fourth parking chip, the first parking chip, the second parking chip, the third parking chip, and the fourth parking chip communicating with each other, and
wherein the method is applied to any one of the first parking chip, the second parking chip, the third parking chip, and the fourth parking chip, and the method comprises:
receiving a parking signal transmitted by the communication device;
detecting whether a parking mechanism corresponding to another parking chip among the first parking chip, the second parking chip, the third parking chip, and the fourth parking chip, other than a present parking chip to which the method is applied, fails, wherein the parking mechanism is comprised in the first parking device or the second parking device; and
in response to detecting that the parking mechanism corresponding to the other parking chip fails, driving, based on a pre-stored backup parking strategy, the parking mechanism corresponding to the other parking chip to perform parking.

2. The method according to claim 1, wherein said detecting whether the parking mechanism corresponding to the other parking chip fails comprises:
determining whether driving power of a solenoid valve pushrod of the vehicle satisfies a predetermined current condition;
determining whether the solenoid valve pushrod is located at a predetermined position; and
obtaining a response state and/or feedback data of the parking mechanism, and determining whether the parking mechanism fails in combination with a pose relationship among parking mechanisms corresponding to the first parking chip, the second parking chip, the third parking chip, and the fourth parking chip.

3. The method according to claim 1, wherein the method further comprises, prior to said driving, based on the pre-stored backup parking strategy, the parking mechanism corresponding to the other parking chip to perform parking:
obtaining failure information of the parking mechanism corresponding to the other parking chip; and
determining the backup parking strategy matching the failure information.

4. The method according to claim 1, wherein the method further comprises, prior to said driving, based on the pre-stored backup parking strategy, the parking mechanism corresponding to the other parking chip to perform parking:
detecting an actual failure type of the parking mechanism corresponding to the other parking chip; and
determining the backup parking strategy based on the actual failure type.

5. The method according to claim 4, wherein the actual failure type comprises at least one of failure of a control assembly of the parking mechanism, failure of a receiving module of the parking mechanism, failure of a clamping module of the parking mechanism, failure of a parking execution module of the parking mechanism, and signal feedback failure of the parking mechanism.

6. The method according to claim 1, wherein the method further comprises, prior to said driving, based on the pre-stored backup parking strategy, the parking mechanism corresponding to the other parking chip to perform parking:
obtaining historical parking data or previous parking data of the parking mechanism corresponding to the other parking chip; and
generating a new parking strategy as the backup parking strategy based on the historical parking data or the previous parking data in combination with a current parking strategy of the present parking chip.

7. The method according to claim 6, wherein said generating the new parking strategy as the backup parking strategy based on the historical parking data or the previous parking data in combination with the current parking strategy of the present parking chip comprises:
determining whether a historical parking operating condition corresponding to the historical parking data or the previous parking data is the same as a current parking operating condition of the vehicle; and
in response to determining that the historical parking operating condition is different from the current parking operating condition, extracting parking preference of a driver from the historical parking data or the previous parking data, and generating the new parking strategy based on the parking preference and the current parking strategy.

8. The method according to any one of claims 1 to 7, wherein said driving, based on the pre-stored backup parking strategy, the parking mechanism corresponding to the other parking chip to perform parking comprises:
obtaining parking information of all failed parking mechanisms;
simulating a parking effect based on the parking information, the backup parking strategy, and parking information of all non-failed parking mechanisms to obtain a simulation result;
determining whether the simulation result satisfies a predetermined safe parking condition; and
in response to determining that the simulation result satisfies the predetermined safe parking condition, driving, based on the backup parking strategy, the parking mechanism corresponding to the other parking chip to perform parking.

9. The method according to any one of claims 1 to 8, wherein the method further comprises, subsequent to said determining whether the simulation result satisfies the predetermined safe parking condition:
in response to determining that the simulation result does not satisfy the predetermined safe parking condition, pushing the simulation result to a predetermined terminal.

10. The method according to claim 1, wherein the method further comprises, prior to said driving, based on the pre-stored backup parking strategy, the parking mechanism corresponding to the other parking chip to perform parking:
determining, based on overall vehicle information of the vehicle, whether the pre-stored backup parking strategy satisfies a predetermined invocation condition; and
in response to determining that the pre-stored backup parking strategy does not satisfy the predetermined invocation condition, generating a corresponding backup parking strategy based on the overall vehicle information and a current parking strategy of the other parking chip, to update the pre-stored backup parking strategy.

11. The method according to claim 1, further comprising:
in response to detecting that a parking mechanism corresponding to the present parking chip fails, driving the parking mechanism corresponding to the present parking chip to perform parking, and transmitting parking information of the parking mechanism corresponding to the present parking chip and/or a parking strategy of the present parking chip and/or a control parameter of the present parking chip to the other parking chip.

12. A vehicle, comprising:
a memory;
a processor; and
a computer program stored in the memory and executable on the processor, wherein the processor executes the program to implement the apparatus for parking the vehicle according to any one of claims 1 to 11.

13. A computer-readable storage medium, storing a computer program, wherein the computer program, when executed, implements the method according to any one of claims 1 to 11.
